# EUROPÄISCHE PATENTSCHRIFT

(11) **EP 2 242 405 B1**
(45) Veröffentlichungstag und Bekanntmachung des Hinweises auf die Patenterteilung: **10.04.2013**
(21) Anmeldenummer: 09708138.4
(22) Anmeldetag: 09.02.2009
(51) Int. Cl.: A47J 27/08

(54) **KOCHGEFÄSS**
COOKING VESSEL
RÉCIPIENT DE CUISSON

(30) Priorität: 08.02.2008 DE 102008008245
(43) Veröffentlichungstag der Anmeldung: 27.10.2010
(73) Patentinhaber: Gero Vertriebs GmbH, 42369 Wuppertal (DE)
(72) Erfinder: REIS PORTUGAL, Mario, 4520-249 Santa Maria da Feira (PT)
(74) Vertreter: Lippert, Stachow & Partner
(86) Internationale Anmeldenummer: PCT/EP2009/051448
(87) Internationale Veröffentlichungsnummer: WO 2009/098317

(56) Entgegenhaltungen:
- EP-A- 1 044 642
- EP-A- 1 611 824
- WO-A-2006/061339

## Beschreibung

Die Erfindung betrifft ein Kochgefäß, insbesondere Schnellkochtopf, umfassend ein topfförmiges Behältnis, einen für das druckdichte Verschließen des Behältnisses vorgesehenen Deckel mit einem Griff und eine Verriegelungsvorrichtung zur Festlegung des Deckels auf dem Behältnis, wobei die Verriegelungsvorrichtung zu ihrer Betätigung eine Betätigungsvorrichtung mit einem bewegbaren Betätigungselement und mit einem Getriebemechanismus zur Umsetzung der Bewegung des Betätigungselementes in eine Ver- und Entriegelungsbewegung aufweist, wobei die Verriegelungsvorrichtung zwei an Deckel und/oder Griff linear verschiebbar geführte Verriegelungselemente aufweist, die in translatorischer Ver- und Entriegelungsbewegung in Ver- und Entriegelungsrichtung radial und einander gegenläufig zwischen einer Verriegelungsposition und einer Entriegelungsposition hin und her bewegbar sind, und der Getriebemechanismus abtriebsseitig zwei Getriebebauteile aufweist, die ihrerseits abtriebsseitig jeweils mit einem zugeordneten Verriegelungselement gekoppelt sind und die wie die Verriegelungselemente in der translatorischen Ver- und Entriegelungsbewegung radial und einander gegenläufig hin- und her bewegbar sind.

Ein bekannter Kochtopf wird beispielsweise in der DE 600 07 607 T2 offenbart. Ferner beschreibt die DE 29510989 U1 ein Kochgefäß mit vom Deckel aus gesteuerten Verriegelungsrichtung. Desgleichen sind aus der DE 10 2004 056 463 A1, der DE 295 10 990 U1 und der WO 2006/056173 A1 gattungsgemäße Kochgefäße bekannt. Bei allen genannten gattungsgemäßen Kochgefäßen funktioniert die Verriegelungsvorrichtung zwar einwandfrei, ist relativ aufwändig sowie vom Design her eher weniger ansprechend.

Bei einem gattungsgemäßen Kochtopf (EP 1611824A1) ist bereits ein Getriebemechanismus zum Verriegeln und Entriegeln eines Topfdeckels bekannt, bei dem zwei parallel nebeneinander liegende Zahnstangen, die mit den Verriegelungselementen verbunden sind, mit einem Zahnrad im Eingriff stehen, dessen Drehachse genau in der vertikalen Mittelachse des Topfdeckels liegt. Zum Drehen des Zahnrades dient ein von Hand betätigbarer, oben auf dem Topfdeckel angebrachter Betätigungsknopf. Ein solcher Mechanismus lässt sich nur mit zwei Händen betätigen und wird in zwei Arbeitsgängen ausgeführt. Beim ersten Arbeitsgang muss der Topf mit einer Hand festgehalten werden, während der Betätigungsknopf mit der anderen Hand zum Lösen der Verriegelungselemente gedreht wird. Erst dann kann der Deckel mit einer Hand abgehoben werden. Zum Verriegeln sind ebenfalls wieder zwei gesonderte Arbeitsgänge erforderlich.

Der Erfindung liegt daher die Aufgabe zugrunde, ein Kochgefäß der eingangs genannten Art mit einer vereinfachten und leicht bedienbaren Verriegelungsvorrichtung bereitzustellen, wobei die Betätigung sowohl beim Verriegeln als auch beim Entriegeln des Deckels mit einer Hand bewerkstelligt werden kann. Zudem soll ein ansprechendes Design des Kochgefäßes ermöglicht werden.

Die gestellte Aufgabe wird erfindungsgemäß durch die Merkmale des Anspruchs 1 und insbesondere dadurch gelöst, dass der Getriebemechanismus ein Zahnradelement und abtriebsseitig zwei als Zahnstangenelemente ausgebildete Getriebebauteile aufweist, die in Eingriff mit dem Zahnradelement stehen, wobei das Zahnradelement um eine Drehachse senkrecht zur Deckelachse und zur Ver- und Entriegelungsbewegung drehbar gelagert und mittels des Betätigungselementes antreibbar ist und wobei die Zahnstangenelemente bezüglich der Drehachse des Zahnradelementes diametral einander gegenüberliegend angeordnet sind.

Vorteilhaft erfolgt somit die Verriegelung durch zwei Verriegelungselemente, die beweglich zum Griff angeordnet sind und somit in einer gleichen Ver- und Entriegelungsbewegung zwischen der Verriegelungsposition und der Entriegelungsposition hin und her bewegbar sind. Dies kann zu einem gleichmäßigeren und sicheren Verschließen des Kochtopfes führen. Da die beiden Getriebebauteile in gleicher Weise wie die Verriegelungselemente in der translatorischen Ver- und Entriegelungsbewegung radial und einander gegenläufig hin- und her bewegbar sind, können sie ihrerseits abtriebsseitig exakt radial an das ihnen jeweils zugeordnete Verriegelungselement ankoppeln. Somit üben die Getriebebauteile auf das jeweils ihnen zugeordnete Verriegelungselement bezüglich einer Ebene senkrecht zur Deckelachse einen rein radialen Kraftimpuls aus, so dass zumindest bezüglich der Ebene senkrecht zur Deckelachse bei der translatorischen Ver- und Entriegelungsbewegung keine zusätzlichen Kraftmomente auftreten, die das Verriegeln und/oder Entriegeln der Verriegelungselemente zumindest erschweren und einen frühzeitigen Verschleiß der Bewegungsteile hervorrufen können. Vorzugsweise sind die Getriebebauteile jeweils unmittelbar an das zugeordnete Verriegelungselement angekoppelt.

In der Verriegelungsposition ist in üblicher Weise der Deckel an dem Behältnis verriegelt, während der Deckel in der Entriegelungsposition das Behältnis freigibt. Insbesondere kann das Verriegelungselement in einer radial nach innen weisenden Verriegelungsrichtung und in einer hierzu entgegengesetzten Entriegelungsrichtung translatorisch verschiebbar sein. Das Verriegelungselement kann somit in Verriegelungsrichtung in die Verriegelungsposition und in Entriegelungsrichtung in die Entriegelungsposition hinein bewegt werden. Mit Deckelachse ist die Achse gemeint, die mittig und senkrecht zu einer von einem äußeren umlaufenden Deckelrand umfassten Grundfläche steht.

Das Betätigungselement ist vorzugsweise unmittelbar von der Außenseite des Griffes her zugänglich. Mittels des Getriebemechanismus die Bewegung des Betätigungselementes in die Ver- und Entriegelungsbewegung umwandelbar. Vorzugsweise ist das Betätigungselement zumindest mit einer Wegkomponente senkrecht oder etwa senkrecht zur Längserstreckung des Griffes bewegbar. Vorzugsweise, insbesondere wenn vorgesehen ist, dass das Betätigungselement an der dem Deckel zugewandten Seite oder abgewandten Seite des Griffes angeordnet ist, kann vorgesehen sein, dass das Betätigungselement in Deckelachse oder etwa in Deckelachse bewegbar ist.

Vorzugsweise sind die beiden Verriegelungselemente (und/oder die Antriebsbauteile mittels der Betätigungsvorrichtung synchron und über gleiche Wege bewegbar sind. Dadurch können in beide Verriegelungselemente gleiche Kräfte zur Verriegelung und Entriegelung eingeleitet werden, welches wiederum eine leichte Bedienbarkeit des Kochgefäßes erhöhen kann. Vorzugsweise können jeweils die Verriegelungselemente und/oder die Antriebsbauteile bezüglich der Deckelachse in einem Drehwinkel von 180° rotationssymmetrisch zueinander angeordnet sein.

Ein weiterer Vorteil kann dadurch erzielt werden, dass die Getriebebauteile ihrerseits antriebsseitig beabstandet voneinander in dem Getriebemechanismus angetrieben werden. Somit können die Getriebebauteile mittelbar miteinander verkoppelt werden, so dass sie sich nicht über ihre Ver- und Entriegelungsbewegung gegenseitig negativ beeinflussen können. Somit können die Getriebebauteile unabhängig voneinander in dem Getriebemechanismus angetrieben werden. Dieses ermöglicht wiederum eine störungsfreiere Ver- und Entriegelungsbewegung der Verriegelungselemente, wodurch die Bedienbarkeit des Kochgefäßes weiter erleichtert werden kann.

In einer üblichen Maßnahme kann die Verriegelungsvorrichtung in der Verriegelungsposition und in der Entriegelungsposition verrasten. Es können die Verriegelungselemente und/oder das Betätigungselement federbelastet in der Verriegelungsposition gehalten werden. Das Verriegelungselement kann federbelastet in der Verriegelungsposition gehalten werden. Die Federbelastung ermöglicht eine sichere Positionierung des Verriegelungselementes in der Verriegelungsposition. Zur Entriegelung wird das Entriegelungselement in Entriegelungsrichtung entgegen der Federbelastung bewegt, sodass entsprechend vorgesehene Federn gespannt werden. Die Federn können an geeigneter Stelle der Verriegelungselemente so angebracht sein, dass sie mit einem Ende an dem Verriegelungselement und mit einem anderen Ende innenseitig an dem Griff bzw. dem Gehäuse des Griffes angreifen. Dadurch sind die Federn zugleich in dem Griff geschützt angeordnet. Die Federn können Schraubenfedern bzw. gewundene Torsionsfedern sein, die in der Entriegelungsposition der Verriegelungselemente bereits so vorgespannt sind, dass sie die Verriegelungselemente sicher in der Verriegelungsposition halten können. Mit Entriegelung der Verriegelungsvorrichtung werden die Federn weiter gespannt. Abhängig von der Art ihres Einsatzes können die Federn als Zug- oder Druckfedern ausgebildet sein.

Der Getriebemechanismus kann ein Zahnradelement und abtriebsseitig zwei als Zahnstangenelemente ausgebildete Getriebebauteile aufweisen, die in Gewindeeingriff mit dem Zahnradelement stehen. Hierbei kann das Zahnradelement um eine Drehachse senkrecht zur Deckelachse und zur Ver- und Entriegelungsbewegung drehbar gelagert sein und mittels des Betätigungselementes vorzugsweise unmittelbar antreibbar sein.

Vorzugsweise sind die Zahnstangenelemente bezüglich der Drehachse des Zahnradelementes diametral einander gegenüberliegend angeordnet. Somit können die Zahnradelemente bezüglich der Drehachse des Zahnradelementes in einem Drehwinkel von 180° rotationssymmetrisch zueinander angeordnet sein. Vorzugsweise greift ein als oberes Zahnstangenelement ausgebildetes Zahnstangenelement in Einbaulage an einer zur Innenseite des Deckels zugewandten Seite des Zahnradelementes und ein als unteres Zahnstangenelement ausgebildetes Zahnstangenelement in Einbaulage an einer von Innenseite des Deckels abgewandten Seite des Zahnradelementes in das Zahnradelement eingreifen.

Die Zahnstangenelemente können im Wesentlichen eine U-Form mit zwei als Zahnstangen ausgebildeten Schenkeln und einem Quersteg aufweisen, wobei die Zahnstangen im Gewindeeingriff mit dem Zahnradelement stehen und der Quersteg mit dem zugehörigen Verriegelungselement verbunden ist. Zur Überwindung einer Deckelwölbung kann vorteilhaft der Quersteg von den Schenkeln weggekröpft ausgebildet sein. Das Verriegelungselement kann hierbei seitlich mit einem der Umsetzungsvorrichtung zugewandten ersten Verbindungsende an eine zu den Zahnstangen parallele Seitenfläche des Steges mittig angreifen. Das Verbindungsende kann über ein Verbindungselement, wie Klemmstift, Schraube oder Niet mit dem Steg verbunden sein. Hierbei kann das erste Verbindungsende so zwischen den beiden Zahnstangen angeordnet sein und innenseitig an denselben anliegen, dass es in Richtung des Quersteges unverrückbar gehalten ist. Somit kann eine feste Verbindung von Verriegelungselement und Zahnstangenelement hergestellt werden, die zugleich eine Führung des Verriegelungselementes in radialer Richtung bewirkt.

In einer Ausführungsform des Kochgefäßes kann das Betätigungselement dreh- oder schwenkbeweglich an dem Griff angeordnet sein. Mittels des Getriebemechanismus kann die Drehbewegung des Betätigungselementes um eine Drehachse oder die Schwenkbewegung des Betätigungselementes um eine Schwenkachse in die radiale Ver- und Entriegelungsbewegung umwandelbar sein. Hierbei kann die Betätigungsvorrichtung zur Umwandlung der Bewegung des Betätigungselementes nach einem Dreh/Schiebe-Prinzip bzw. einem Verschwenk/Schiebe-Prinzip arbeiten. Das Betätigungselement kann als Schwenkhebel ausgebildet sein. Der Schwenkhebel kann in einer Schwenkbewegung um eine Schwenkachse senkrecht zur Verriegelungsrichtung verschwenkbar an dem Griff angeordnet sein.

Hierbei kann der Schwenkhebel zur Verriegelung zu dem Griff hin und/oder in den Griff hinein verschwenkbar sein und vorzugsweise dort verrastbar sein. Der Schwenkhebel kann in der Entriegelungsposition über die Außenkontur des Griffes vorstehen und in der Verriegelungsposition in der Außenkontur des Griffes integriert sein. Indem der Schwenkhebel in der Entriegelungsposition über die Außenkontur des Griffes vorsteht, ist er manuell leichter erreichbar und zeigt zugleich optisch deutlich an, dass der Deckel entriegelt ist. Zur Verrastung kann der Schwenkhebel exzentrisch so verschwenkbar gelagert sein, dass er in zwei mechanisch stabile Positionen hinein verrasten kann, wobei die Verriegelungselemente in der einen Position verriegelt und in der anderen Position entriegelt sind.

Der Schwenkhebel kann kraft- und/oder formschlüssig, insbesondere stoffschlüssig, mit dem Zahnradelement verbunden sein.

In einer Ausführungsform des Kochgefäßes können die Schwenkachse des Schwenkhebels und die Drehachse des Zahnradelementes parallel beabstandet zueinander angeordnet sein. Zur unmittelbaren bewegungsschlüssigen Verbindung kann der Schwenkhebel an einer bezüglich der Schwenkbewegung umfänglichen Seitenfläche einen Zahnreihenabschnitt aufweisen, der in Gewindeeingriff mit Zahnradelement steht. Der Hebelarm zwischen der Schwenkachse und dem Zahnreihenabschnitt ist vorzugsweise größer als der Hebelarm zwischen der Drehachse des Zahnrades und seinem umfänglichen Zahnkranz. Vorzugsweise ist der Zahnreihenabschnitt an einer bezüglich der Schwenkbewegung des Hebels radial äußere Seitenfläche des Hebels angeordnet. Das Zahnradelement ist vorzugsweise als Ritzel ausgebildet, welches sich platzsparend in den Griff integrieren lässt.

Der Schwenkhebel kann mit seiner äußeren, den Zahnreihenabschnitt aufweisenden Seitenfläche mittig und die Zahnstangen können in Drehachse des Zahnrades zu beiden Seiten des Zahnreihenabschnittes an dem Zahnrad angreifen. Dadurch wird eine symmetrische Kraftabgabe und -Aufnahme an das bzw. von dem Zahnradelement ermöglicht. Das Zahnradelement kann als Ritzel ausgebildet sein.

In einer bevorzugten Aufbildungsform des Kochgefäßes können die Schwenkachse des Schwenkhebels und die Drehachse des Zahnradelementes zusammenfallen. Somit können Schwenkhebel und Zahnradelement auf einer gleichen Achse bewegt werden, wobei beide drehfest auf der Achse angeordnet und/oder seitlich bezüglich einer Ebene senkrecht zur Drehachse aneinander kraft- und/oder formschlüssig verdrehfest festgelegt, insbesondere stoffschlüssig miteinander verbunden sein können. Somit kann das Zahnradelement bezüglich seiner Drehachse vorteilhaft kräftemechanisch symmetrisch angetrieben werden. Zudem kann der Getriebemechanismus dadurch weiter vereinfacht werden.

Da kräftemechanisch günstig, kann beidseitig des Schwenkhebels jeweils ein Zahnradelement vorgesehen sein oder der Schwenkhebel auf das Zahnradelement so verdrehfest aufgezogen sein, dass das Zahnradelement den Schwenkhebel beidseitig axial überragt. Die Zahnstangenelemente können auch hier antriebsseitig jeweils zwei parallel beabstandete Zahnstangen aufweisen, die jeweils in Gewindeeingriff mit einem zugeordneten Zahnradelement stehen. Die Zahnung des Zahnradelementes kann jeweils auf den umfänglichen Bereich begrenzt sein, der für den Gewindeeingriff des zugeordneten Zahnstangenelementes über die Ver- und Entriegelungsbewegung vorgesehen ist. Das obere Zahnstangenelement kann, wie oben beschrieben, antriebsseitig zum Durchgriff des Schwenkhebels bezüglich seiner Längserstreckung U-förmig mit zwei als Zahnstangen ausgebildeten Schenkeln und einem Quersteg ausgebildet sein. Hierbei können die Zahnstangen im Gewindeeingriff mit dem Zahnradelement stehen und der Quersteg mit dem zugehörigen Verriegelungselement verbunden sein. Zu verbesserten Stabilität können bei dem unteren Zahnstangenelement die Zahnstangen an ihrer in Einbaulage dem Zahnradelement abgewandten seine flächig mit einem Quersteg verbunden sein. Der Quersteg kann zugleich an seiner in Einbaulage dem Zahnradelement abgewandten Seite eine als Gleitfläche ausgebildete Seitenfläche zum Abgleiten des Zahnstangenelementes an einer zugehörigen, senkrecht zur Deckelachse angeordneten Seitenfläche des Griffes aufweisen.

Vorzugsweise ist der Aufbau der Verriegelungsvorrichtung bzw. der der Betätigungsvorrichtung spiegelsymmetrisch mit einer Spiegelsymmetrieebene, die senkrecht zur Ver- und Entriegelungsrichtung angeordnet ist und die Deckelachse enthält. Hierzu liegt bei der Ausführungsform des Kochgefäßes mit Zahnradelement dasselbe bzw. das Ritzel vorzugsweise mit seiner Drehachse in der Spiegelsymmetrieebene, wobei lediglich das Betätigungselement die Spiegelsymmetrie bricht, wenn es, wie oben beschrieben, einseitig der Spiegelsymmetrieebene angeordnet ist. Bei der Ausführungsform des Kochgefäßes mit Gleitkörpern ist zweckmäßig das Betätigungselement mittig angeordnet.

Zur Führung von Verriegelungselement und/oder Zahnstangenelement können dieselben an vorgesehene Führungsflächen abgleiten, die senkrecht zur Deckelachse angeordnet sind und die vorzugsweise fest mit dem Griff verbunden bzw. Teile des Gehäuses des Griffes sind. Die Führungsflächen können so ausgerichtet sein, dass sie das Verriegelungselement und/oder Zahnstangenelement senkrecht zur Verriegelungsrichtung abstützen und Verriegelungselement und/oder Zahnstangenelement in Verriegelungsrichtung an denselben abgleiten. Die Führungsflächen können durch Seitenwände eines Führungskanales gebildet werden, in dem das Verriegelungselement und/oder Zahnstangenelement angeordnet sind. Dieser Führungskanal kann das Gehäuse des Griffes sein.

Die Getriebebauteile können jeweils starr mit dem zugeordneten Verriegelungselement verbunden sein. Bevorzugt wird eine schwenkbewegliche Verbindung von Getriebebauteil und geführtem Verriegelungselement, welchem einem möglichen Verkanten entgegenwirkt. Die Schwenkachse der schwenkbeweglichen Verbindung von Getriebebauteil und geführtem Verriegelungselement liegt vorzugsweise parallel zur Deckelachse.

Vorzugsweise ist die Verriegelungsvorrichtung in dem Griff integriert. Vorzugsweise ist zumindest Betätigungsvorrichtung vorzugsweise mittig in dem Griff integriert. Dadurch ist die Verriegelungsvorrichtung gegen äußere Einwirkung geschützt in dem Griff angeordnet. Infolge dieser Anordnung können Festlegungen von Halterungen und Führungen für bewegliche Bauteile der Verriegelungsvorrichtung, die bei bekannten Kochgefäßen in der Regel aufwändig am Deckel montiert sind, in den Griff verlegt und damit von Gehäusewandung zumindest zu zwei Seiten hin umgeben werden, an denen derartige Halterungen und Führungen wesentlich einfacher und unaufwändiger zu realisieren sind. Der Griff kann beispielsweise ein vorzugsweise zweischaliges Spritzgussbauteil vorzugsweise aus Kunststoff sein, an dem notwendige Halterungssockel und Führungssockel mit dem Spritzgießen mit ausgebildet werden können. Schließlich können die technisch notwenigen Bauteile der Verriegelungsvorrichtung zumindest zum überwiegenden Teil in dem Deckgriff verbogen angeordnet sein. Somit kann das den Griff bestimmende Design im Wesentlichen durch das Gehäuse des Griffes bestimmt werden. Dies eröffnet eine Vielzahl von technisch einfach realisierbaren, beispielsweise formeleganten und zugleich ergonomischen Formgebungen des Griffes und des Deckels sowie des Gefäßes insgesamt. Vorzugsweise ist der Aufbau der Verriegelungsvorrichtung in dem Griff spiegelsymmetrisch mit einer Spiegelsymmetrieebene, die senkrecht zur Längserstreckung des Griffes angeordnet ist und die Deckelachse enthält. Dieser spiegelsymmetrische Aufbau erleichtert eine entsprechend spiegelsymmetrische Verteilung der Kräfte, die zur Verriegelung und Entriegelung benötigt werden. Ferner lässt dies eine entsprechend formästhetische Ausgestaltung des Griffes bzw. des Deckels zu.

Das Betätigungselement kann so an den Griff angeordnet sein, dass es zur einhändigen Betätigung des Kochgefäßes mit manuellem Umgreifen des Griffes betätigbar ist. Somit kann das Verriegeln und Entriegeln des Deckels mittels der Verriegelungsvorrichtung auf sehr einfache Weise einhändig erfolgen. Da die technisch notwendigen Bauteile der Verriegelungsvorrichtung sich nicht außerhalb des Griffes befinden und somit das Ergreifen des Griffes behindern können, kann der Griff entsprechend sicherer und, vom Ansatz manueller Kräfte zur Betätigung der Verriegelungsvorrichtung her, günstiger ergriffen und leichter auf das Behältnis bzw. von dem Behältnis weg geführt werden. Vorzugsweise ist der Griff ergonomisch gestaltet.

Der Griff kann sich vorteilhaft zumindest über einen Griffabschnitt seiner Längserstreckung beabstandet zu dem Deckel erstrecken. Hierbei kann der Griff in diesem Griffabschnitt einen Zwischenraum mit dem Deckel begrenzen. Dieser Zwischenraum ist vorzugsweise so groß ausgestaltet, dass ein Benutzer bequem mit seinen Fingern zwischen Griff und Deckel gelangen kann, ohne Gefahr zu laufen, eventuell thermisch gut leitende Bereiche des Deckels zu berühren. Vorzugsweise ist das Betätigungselement in dem Griffabschnitt angeordnet.

Der Griff kann sich bügelförmig oder bogenförmig über den gesamten Deckel erstrecken. Hierbei kann er zwei Griffenden aufweisen, an denen der Griff randseitig an dem Deckel festgelegt ist, welches von der Mechanik her günstig ist. Das Betätigungselement kann hierbei in einem mittleren Griffabschnitt des Griffes angeordnet sein. Vorzugsweise ist das Betätigungselement in einer radialen Mitte des Griffes angeordnet.

Der Deckel kann eine Griffmulde aufweisen, die den Zwischenraum begrenzt. Somit kann der Zwischenraum an zweiten Seiten durch den Griff und die Griffmulde begrenzt werden. Beides ermöglicht eine bessere ergonomische Gestaltung des Griffes, da über die Griffmulde ein ausreichend großer Zwischenraum zum manuellen Eingreifen des Benutzers geschaffen werden kann, ohne dass der Griff in einem größeren Bogen über den gesamten Deckel geführt werden muss.

Insbesondere bei seiner Anordnung an der dem Deckel zugewandten Seite des Griffes kann das Betätigungselement mit seiner Außenkontur bündig oder mit einem vorzugsweise geringen Betrag überstehend in die Außenkontur des Griffes in die Außenkontur des Griffes integriert sein. Es kann auch mit einem vorzugsweise geringen Versatz in den Griff hinein angeordnet sein. Dies ermöglicht eine unauffällige Anordnung des Betätigungselementes in dem Griff. Ferner unterstützt dieses ein ergonomisches Ergreifen des Deckels, da bei einem manuellen Ergreifen, beispielsweise ein Finger, nicht in einer zur Außenkontur des Griffes erhöhte Position gebracht werden muss, welches unter Umständen die Einleitung manueller Kräfte zur Betätigung der Verriegelungsvorrichtung erschweren würde.

Zur Herstellung eines festen Verbundes zwischen Deckel und Gefäß kann Verriegelungsvorrichtung zwei bezüglich des Deckels radial einander gegenüberliegende Verschlusselemente aufweisen. Von diesen kann mindestens eines radial verschieblich an dem Griff gelagert und mittels der Betätigungsvorrichtung bewegbar sein. Die Verschlusselemente können als übliche Klemmbacken ausgebildet sein. Das Verriegelungselement kann kraft- und/oder formschlüssig, insbesondere innerhalb eines Spieles um eine Schwenkachse parallel zur Deckelachse schwenkbeweglich, mit dem Verschlusselement verbunden sein. In einer bevorzugten vereinfachten Ausführungsform des Kochgefäßes können Verschlusselement und Verriegelungselement einstückig miteinander verbunden sein.

In der Verriegelungsposition können die Klemmbacken einen am Behältnis vorgesehen, nach außen abgewinkelten oder umgebördelten Topfrand zumindest teilumfänglich umgreifen und untergreifen. Ferner kann zumindest eine der Klemmbacken in einer Wirkverbindung mit dem Entriegelungselement stehen.

Die Klemmbacken können einen U-förmigen Querschnitt mit zwei Klemmschenkeln aufweisen. Ein bezüglich des Gefäßes hinterer erster Klemmschenkel kann in der Verriegelungsposition oberhalb an dem äußeren Deckelrand angreifen, während ein bezüglich des Gefäßes vorderer zweiter Klemmschenkel den Topfrand untergreift. Topfrand und äußerer Deckelrand können bei aufgesetztem Deckel endseitig stumpf aneinanderstoßen. Zur Abdichtung des Kochgefäßes kann ein an den Deckelumfang angepasster, umlaufender Dichtungsring vorgesehen sein. Dieser kann eine übliche Ausgestaltung aufweisen. Vorzugsweise weist der Dichtungsring eine U-Form mit geöffneten Schenkeln auf.

Das Betätigungselement kann sich haptisch und/oder optisch von dem Griff absetzen. Dies erleichtert einem Benutzer ein Auffinden des Betätigungselementes. Das Betätigungselement kann zur haptischen Unterscheidung beispielsweise eine mit einer Riffelung versehene Oberfläche aufweisen, die zudem rutschfest ausgebildet sein kann. Zur optischen Unterscheidbarkeit kann das Betätigungselement eine Farbgebung aufweisen, mittels der es sich hinsichtlich des Farbwertes, der Farbintensität und/oder des Farbtones von dem Griff unterscheidet. Ferner können sich Griff und Betätigungselement hinsichtlich eines Transparentgrades ihrer Werkstoffe unterscheiden.

Die vorliegende Erfindung wird im Folgenden anhand mehrerer in einer Zeichnung dargestellter Ausführungsformen näher erläutert. In der Zeichnung zeigen:
- Fig. 1: eine Längsschnittsansicht einer ersten Ausführungsform eines Kochgefäßes in einer Verriegelungsposition mit einem einen Griff aufweisenden Deckel,
- Fig. 2: eine Draufsicht auf die Ausführungsform des Kochgefäßes gemäß Figur 1, wobei eine obere Seitenwand des Griffes fortgelassen ist,
- Fig. 3: eine Längsschnittsansicht einer zweiten Ausführungsform des Kochgefäßes mit Deckel in einer Entriegelungsposition,
- Fig. 4: eine Querschnittsansicht der zweiten Ausführungsform des Kochgefäßes in der Entriegelungsposition gemäß dem in Figur 3 eingezeichneten Schnittverlauf IV-IV,
- Fig. 5: eine Längsschnittsansicht der zweiten Ausführungsform des Kochgefäßes gemäß Figur 3, jedoch in Verriegelungsposition, und
- Fig. 6: eine Querschnittsansicht der zweiten Ausführungsform des Kochgefäßes in Verriegelungsposition gemäß dem in Figur 5 eingezeichneten Schnittverlauf VI-VI und

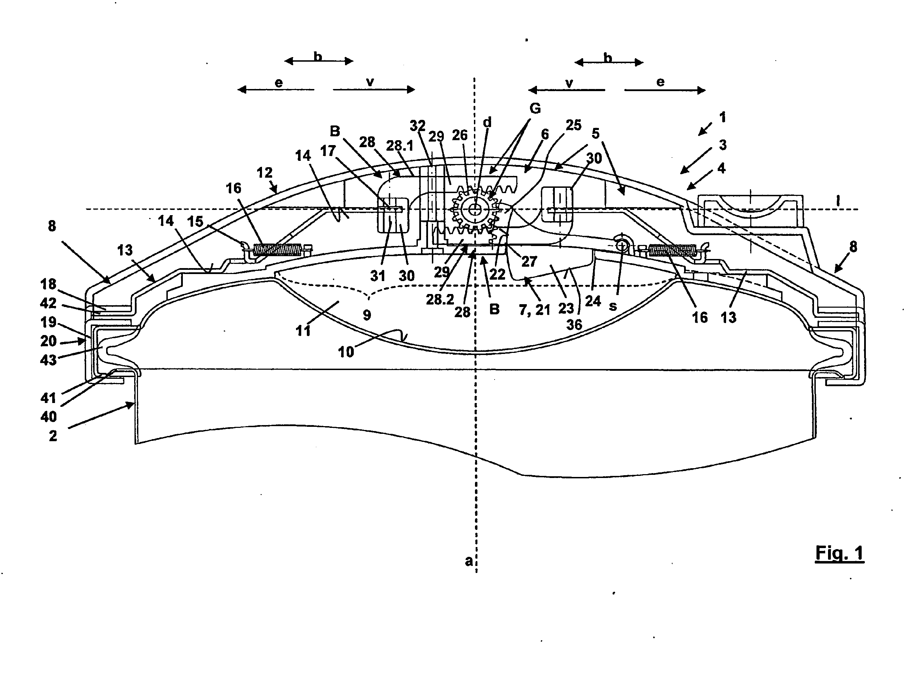

In den Figuren 1 bis 6 wird jeweils ein Kochgefäß 1 dargestellt, das hier als Schnellkochtopf ausgebildet ist. Das Kochgefäß 1 umfasst ein topfförmiges Behältnis 2, einen für das druckdichte Verschließen des Behältnisses vorgesehenen Deckel 3 mit einem Griff 4 und eine Verriegelungsvorrichtung 5 zur Festlegung des Deckels 3 auf dem Behältnis 2. Die Verriegelungsvorrichtung 5 weist eine Betätigungsvorrichtung 6 mit einem Betätigungselement 7 auf, das von der Außenseite des Griffes 4 her zugänglich ist und mit einer größeren Wegkomponente in Richtung der Deckelachse a bewegbar an dem Griff 4 angeordnet. Ferner umfasst die Betätigungsvorrichtung 6 einen Getriebemechanismus G, mittels dessen die Bewegung des Betätigungselementes (7) in die Ver- und Entriegelungsbewegung (b) umwandelbar ist.

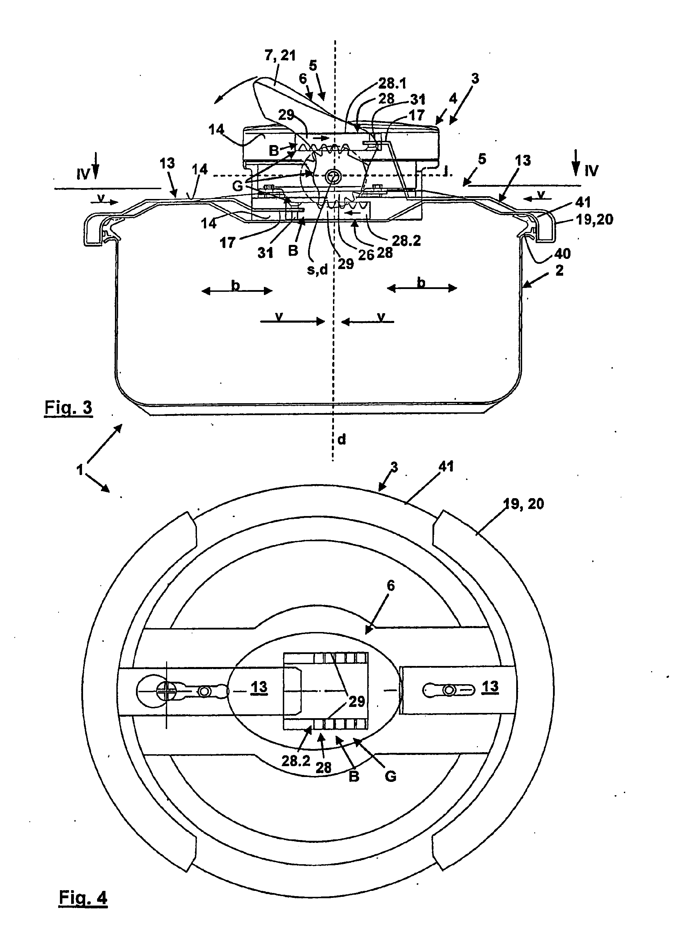

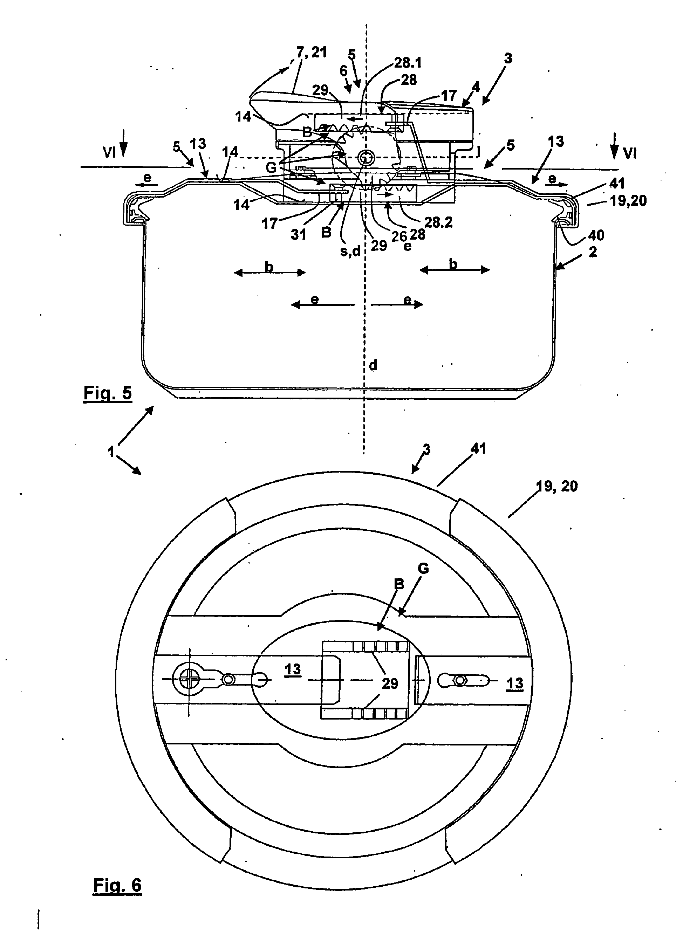

Die Verriegelungsvorrichtung 5 weist zwei an Griff 4 bzw. an Deckel 3 und Griff 4 linear verschiebbar geführte Verriegelungselemente 13 auf. Diese sind in einer translatorischer Ver- und Entriegelungsbewegung b in Ver- und Entriegelungsrichtung v,e radial und einander gegenläufig zwischen einer Verriegelungsposition und einer Entriegelungsposition hin und her bewegbar. Die Verriegelungselemente 13 werden zur Verriegelung in einer Verriegelungsrichtung v radial nach innen und zur Entriegelung in eine Entriegelungsrichtung e radial nach außen bewegt. In der Verriegelungsposition ist der Deckel 3 an dem Behältnis 2 verriegelt. In der Entriegelungsposition gibt der Deckel 3 das Behältnis 2 frei. Die Verriegelungsposition wird in den Figuren 1, 2, 3 und 5 dargestellt, während die Entriegelungsposition in den Figuren 4 und 6 wiedergegebenen ist. Ferner weist der Getriebemechanismus (G) abtriebsseitig zwei Getriebebauteile (B) auf. Diese sind ihrerseits abtriebsseitig jeweils mit einem zugeordneten Verriegelungselement 13 gekoppelt. Ferner sind die Getriebebauteile (B) in gleicher Weise wie die Verriegelungselemente 13 in der translatorischen Ver- und Entriegelungsbewegung (b) radial und einander gegenläufig hin- und her bewegbar. Somit üben die Getriebebauteile B auf das jeweils ihnen zugeordnete Verriegelungselement 13 bezüglich einer Ebene senkrecht zur Deckelachse a einen rein radialen Kraftimpuls auf. Dadurch ist ein leichteres Verschieben der Verriegelungselemente 13 und damit ein leichtere Bedienbarkeit des Kochgefäßes 1 gegeben.

Die Verriegelungsvorrichtung 5 ist in den in Figuren 1 bis 6 dargestellten beiden Ausführungsform des Kochgefäßes 1 bis auf das Betätigungselement 7 etwa spiegelsymmetrisch ausgebildet, wobei die zugehörige Spiegelsymmetrieebene in allen Figuren senkrecht zur Bildebene steht bzw. senkrecht zur Längserstreckung 1 des Griffes 4 angeordnet ist und die Deckelachse a enthält.

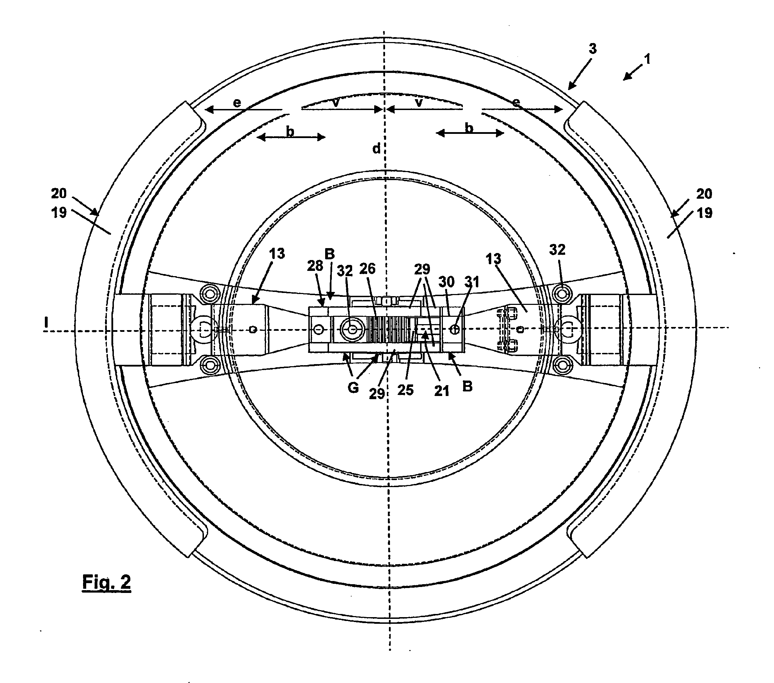

Der Griff 4 längserstreckt sich in der ersten Ausführungsform des Kochgefäßes gemäß den Figuren 1 und 2 bügelförmig über den gesamten Deckel 3 und ist mit zwei Griffenden 8 randseitig an dem Deckel 3 festgelegt. Hier ist die Verriegelungsvorrichtung 5 mit der Betätigungsvorrichtung 6 in dem Griff integriert. In einem mittleren Griffabschnitt 9 ist der Griff 4 beabstandet zu dem Deckel 3 angeordnet, der im Bereich des mittleren Griffabschnittes 9 eine Griffmulde 10 aufweist. Griffabschnitt 9 und Griffmulde 10 begrenzen einen Zwischenraum 11, in den ein hier nicht dargestellter Benutzer manuell eingreifen kann. Das Betätigungselement 7 ist an der dem Zwischenraum 11 zugewandten Seite des Griffes 4 in dem Griffabschnitt 9 mittig angeordnet. Die günstige Anordnung des Betätigungselementes 7 erlaubt es problemlos, den Deckel einhändig von dem Behältnis 2 zu lösen bzw. auf dasselbe aufzusetzen und zu verriegeln. Ferner weist der Deckel 3 mit dem Griff 4 ein formelegantes Design auf.

In der Ausführungsform gemäß den Figuren 3 bis 6 ist der Griff 4 knopfartig konzipiert, wobei das Betätigungselement 7 auf der dem Deckel 3 abgewandten Seite des Griffes 4 angeordnet ist. In der Entriegelungsposition gemäß den Figuren 3 und 4 überragt das Betätigungselement 7 den Griff 4 und wird zur Verriegelung soweit zu dem Griff 4 hin verschwenkt, dass es in der Verriegelungsposition in der Außenkontur des Griffes 4 integriert ist.

In der ersten Ausführungsform des Kochgefäßes 1 gemäß den Figuren 1 und 2 werden die Verriegelungselemente 13 federbelastet in die Entriegelungsposition geführt und sind zudem bereits in der Verriegelungsposition federbelastet, während in der zweiten Ausführungsform des Kochgefäßes 1 gemäß den Figuren 3 bis 6 die beiden Verriegelungselemente 13 allein über die auf das Betätigungselement 7 ausgeübte Kraft bewegt werden. Daher ist in der zweiten Ausführungsform des Kochgefäßes vorgesehen, dass das Betätigungselement 7 in beiden Positionen der Verriegelungselemente 13 verrastet.

Die Verriegelungselemente 13 einer Ausführungsform des Kochtopfes 1 sind identisch aufgebaut. Die Verriegelungselemente 13 weisen in ihrer Längserstreckung einen stufenförmigen Verlauf auf, um an den bügelförmigen Verlauf des Griffes 4 angepasst zu sein. Ferner wird hierdurch die Verwindungs- und Knickfestigkeit der Verriegelungselemente 13 gesteigert. Die Verriegelungselemente 13 sind aus einem Blech erforderlicher Steifigkeit hergestellt. Sie weisen ein erstes Verbindungsende 17 und ein zweites Verbindungsende 18 auf, wobei sie mit dem ersten Verbindungsende 17 formkraftschlüssig an ihrem jeweils zugeordneten Getriebebauteil G der Betätigungsvorrichtung 6 und mit dem zweiten Verbindungsende 18 formkraftschlüssig an ihrem jeweils zugeordneten, als Klemmbacke 19 ausgebildeten Verschlusselement angreifen. Zur Führung der Verriegelungselemente 13 sind Führungsflächen 14 vorgesehen, die senkrecht zu einer Deckelachse a des Deckels 3 und in Verriegelungsrichtung v bzw. Ver- und Entriegelungsbewegung b verlaufen.

In der ersten Ausführungsform des Kochgefäßes 1 gemäß den Figuren 1 und 2 weisen beide Verriegelungselemente 13 weisen in gleicher Höhe einen Federvorsprung 15 auf, an den jeweils eine in Verriegelungsposition vorgespannte Zugfeder 16 in Verriegelungsrichtung v angreift, die ihrerseits innenseitig an dem Gehäuse 12 innenseitig festgelegt ist.

In der in den Figuren 1 bis 6 dargestellten Ausführungsformen des Kochgefäßes 1 ist das Betätigungselement 7 als Schwenkhebel 21 ausgebildet, der um eine Schwenkachse s verschwenkbar an dem Griff 4 gelagert ist. Die Schwenkachse s ist senkrecht zur Deckelachse a und zur Verriegelungsrichtung v bzw. zur Entriegelungsrichtung e angeordnet. Der Schwenkhebel 21 ragt in einer in den Figuren dargestellten Grundposition mit einem Betätigungsabschnitt 23 aus einer Öffnung 24 aus dem Griff 4 heraus. Zudem ist ein Zahnradelement 26 vorgesehen, das um eine senkrecht zur Deckelachse a und zur Ver- und Entriegelungsbewegung b angeordnete Drehachse d drehbar gelagert ist und auf mittels des Betätigungselementes 7 angetrieben wird. Das Zahnradelement 26 ist zudem kräftemechanisch günstig mittig in dem Griff 4 angeordnet. Die Deckelachse a schneidet somit die Drehachse d des Zahnradelementes 26.

Das Zahnradelement 26 ist in der ersten Ausführungsform des Kochgefäßes 1 als Ritzel 26.1 mit vollumfänglicher Auenverzahnung 26.2 ausgebildet, während es in der zweiten Ausführungsform des Kochgefäßes 1 lediglich umfänglich dort soweit eine Außenverzahnung 26.2 aufweist, wie sie für ein ordnungsgemäßes Verschieben der Verriegelungselemente 13 notwendig ist.

In der beiden ersten Ausführungsformen des Kochgefäßes 1 gemäß den Figuren 1 bis 6 sind die Getriebebauteil B als Zahnstangenelemente 28 ausgebildet, die hier mit jeweils zwei Zahnstangen 29 in Gewindeeingriff mit dem Zahnradelement 26 stehen. Die Zahnstangen 29 erstrecken sich in radialer Richtung. Die Zahnstangenelemente 28 sind bezüglich der Drehachse (d) des Zahnradelementes (26) so diametral einander gegenüberliegend angeordnet, dass in der in den Figuren 1 bis 6 gezeigten Einbaulage ein Zahnstangenelement 28 als oberes Zahnstangenelement (28.1) und ein Zahnstangenelement 28 als unteres Zahnstangenelement (28.2) ausgebildet ist.

In der ersten Ausführungsform des Kochgefäßes 1 gemäß den Figuren 1 und 2 ist die Schwenkachse s parallel beabstandet zu der Drehachse d des Zahnradelementes 26 angeordnet. Der Schwenkhebel 21 ist bezüglich der Längserstreckung 1 des Griffes 4 außermittig und in den Figuren rechts vom Zahnradelement 26 positioniert. Zur Überbrückung der Beabstandung weist der Schwenkhebel 21 bezüglich seiner Schwenkbewegung eine radial äußere Seitenfläche 22 mit einem Zahnreihenabschnitt 25 auf, der in Gewindeeingriff mit Zahnradelement 26 steht. Das Zahnradelement 26 ist hier als Ritzel 26.1 ausgeführt. Der Zahnreihenabschnitt 25 dient zugleich als seitlicher Anschlag 27 zur Begrenzung der Schwenkbewegung des Schwenkhebels 21.

Wie insbesondere Fig. 2, 4 und 6 entnehmbar, weisen die Zahnstangenelemente 28 jeweils eine U-Form mit zwei als Zahnstangen 29 ausgebildeten Schenkeln und einen Quersteg 30 auf, wobei die Zahnstangen 29 im Gewindeeingriff mit dem Ritzel 26.1 stehen und der Quersteg 30 mit dem ersten Verbindungsende 17 des Verriegelungselementes 13 form- und kraftschlüssig verbunden ist. In Anpassung an die Bügelform des Griffes 4 ist, wie in Fig. 1 ersichtlich, in der ersten Ausführungsform des Kochtopfes 1 der Quersteg 30 von den Zahnstangen 29 in Deckelachse a weggekröpft, wobei das Verriegelungselement 13 mit seinem ersten Verbindungsende 17 an einer in Deckelachse a den Zahnstangen 29 zugewandten Seitenfläche des Quersteges 30 angreift und seitlich an den Zahnstangen 29 anliegt. Das erste Verbindungsende 17 ist mittels eines durch das erste Verbindungsende 17 und den Quersteg 30 mittig geführten Stiftes 31 an dem Quersteg 30 festgelegt. In einer günstig vereinfachten Bauweise sind die Zahnstangenelemente 28 in der zweiten Ausführungsform des Kochgefäßes gestreckt ausgebildet, wobei eine Deckelwölbung durch den radialen Verlauf der Verriegelungselemente 13 ausgeglichen wird.

In der ersten Aufbildungsform des Kochgefäßes 1 gemäß den Figuren 1 und 2 durchgreift der Schwenkhebel 21 mit seinem Zahnreihenabschnitt 25 das in Figur 1 unterhalb des Ritzels 26.1 angeordnete Zahnstangenelement 28.2, das seinerseits auf das hier rechte Verriegelungselement 13 einwirkt. Hierbei ist das Zahnstangenelement 28 in seiner Quererstreckung senkrecht zu Deckelachse a so ausgebildet, dass es seitlich mit Spiel innenseitig an den Zahnstangen 29 des rechten Zahnstangenelementes 28 anliegt. Hierdurch wird gleichzeitig eine gegenseitige seitliche Führung senkrecht zur Deckelachse a geschaffen. Zur weiteren seitlichen Führung der Verriegelungselemente 13 bzw. der Zahnstangenelemente 28 sind weitere, runde Führungsstifte vorgesehen, die seitlich an den Verriegelungselementen 13 bzw. an dem hier linken Zahnstangenelement 28 anliegen.

In der zweiten Aufbildungsform des Kochgefäßes 1 gemäß den Figuren 3 bis 6 fallen die Schwenkachse s des Schwenkhebels 21 und die Drehachse d des Zahnradelementes 26 zusammen. Somit werden Schwenkhebel 21 und Zahnradelement 26 auf einer gemeinsamen Achse s,d bewegt, auf der sie relativ zueinander verdrehfest angeordnet sind, wobei sie seitlich bezüglich einer Ebene senkrecht zur Drehachse d aneinander kraft- und/oder formschlüssig festgelegt. Somit kann das Zahnradelement 26 bezüglich seiner Drehachse d vorteilhaft kräftemechanisch symmetrisch angetrieben werden. Zudem kann der Getriebemechanismus G dadurch weiter vereinfacht werden. Kräftemechanisch günstig, ist beidseitig des Schwenkhebels 21 jeweils ein Zahnradelement vorgesehen sein, an das jeweils eine Zahnstange 29 des oberen Zahnstangenelementes 28.1 und des unteren Zahnstangenelementes 28.2 angreift.

Mittels des Getriebemechanismus G wird somit in der ersten und zweiten Ausführungsform des Kochgefäßes 1 gemäß den Figuren 1 bis 6 die Schwenkbewegung des Schwenkhebels 21 über eine Drehbewegung des Zahnradelementes 26 in die translatorische Ver- und Entriegelungsbewegung b umgewandelt.

In der ersten Ausführungsform des Kochgefäßes 1 greift jeweils das zweite Verbindungsende 18 eines Entriegelungselementes 13 zur formschlüssigen Verbindung in eine Tasche 42 ein, die an der jeweils zugeordneten Klemmbacke 19 vorgesehen ist. In der zweiten Ausführungsform des Kochgefäßes 1 wird eine vereinfachte Konstruktion gezeigt, indem hier die Entriegelungselemente 13 jeweils einstückig mit der zugehörigen Klemmbacke 19 verbunden sind.

Bei allen gezeigten Ausführungsformen des Kochgefäßes 1 weist das Behältnis 2 einen nach außen abgewinkelten und umgebördelten Topfrand auf, der von den Klemmbacken 19 teilumfänglich umgriffen und untergriffen wird. Ein äußerer Deckelrand 41 und der Topfrand 40 liegen stirnendseitlich und umfänglich aneinander an. Zur Abdichtung des Kochgefäßes 1 ist ein üblicher Dichtungsring 43 vorgesehen. Behältnis 2 und Deckel 3 weisen einen kreisrunden Querschnitt auf.

Bei allen in den Figuren gezeigten Ausführungsformen des Kochgefäßes 1 ist ein vorgesehenes übliches Druckventil zur klareren Darstellung erfindungswesentlicher Bauteile nicht wiedergegeben oder beschrieben.

### Kochgefäß

### Bezugszeichenliste

- 1: Kochgefäß
- 2: Behältnis
- 3: Deckel
- 4: Griff
- 5: Verriegelungsvorrichtung
- 6: Betätigungsvorrichtung
- 7: Betätigungselement
- 8: Griffende
- 9: Griffabschnitt
- 10: Griffmulde
- 11: Zwischenraum
- 12: Gehäuse
- 13: Verriegelungselement
- 14: Führungsfläche
- 15: Federvorsprung
- 16: Zugfeder
- 17: erstes Verbindungsende
- 18: zweites Verbindungsende
- 19: Klemmbacke
- 20: Verschlusselement
- 21: Schwenkhebel
- 22: äußere Seitenfläche
- 23: Betätigungsabschnitt
- 24: Öffnung
- 25: Zahnreihenabschnitt
- 26: Zahnradelement
- 26.1: Ritzel
- 27: Anschlag
- 28: Zahnstangenelement
- 28.1: oberes Zahnstangenelement
- 28.2: unteres Zahnstangenelement
- 29: Zahnstange
- 30: Quersteg
- 31: Stift
- 32: Führungsstift
- 40: Topfrand
- 41: Deckelrand
- 42: Tasche
- 43: Dichtungsring
- a: Deckelachse
- b: Ver- und Entriegelungsbewegung
- d: Drehachse
- l: Längserstreckung
- s: Schwenkachse
- v: Verriegelungsrichtung
- e: Entriegelungsrichtung
- E1: erste schiefe Ebene
- E2: zweite schiefe Ebene
- B: Getriebebauteil
- G: Getriebemechanismus

## Patentansprüche

1. Kochgefäß (1), insbesondere Schnellkochtopf, umfassend ein topfförmiges Behältnis (2), einen für das druckdichte Verschließen des Behältnisses (2) vorgesehenen Deckel (3) mit einem Griff (4) und eine Verriegelungsvorrichtung (5) zur Festlegung des Deckels (3) auf dem Behältnis (2), wobei die Verriegelungsvorrichtung (5) zu ihrer Betätigung eine Betätigungsvorrichtung (6) mit einem bewegbaren Betätigungselement (7) und mit einem Getriebemechanismus (G) zur Umsetzung der Bewegung des Betätigungselementes (7) in eine Ver- und Entriegelungsbewegung (b) aufweist, wobei die Verriegelungsvorrichtung (5) zwei an Deckel (3) und/oder Griff (4) linear verschiebbar geführte Verriegelungselemente (13) aufweist, die in translatorischer Ver- und Entriegelungsbewegung (b) in Ver- und Entriegelungsrichtung (v,e) radial und einander gegenläufig zwischen einer Verriegelungsposition und einer Entriegelungsposition hin und her bewegbar sind, und wobei der Getriebemechanismus (G) abtriebsseitig zwei Getriebebauteile (B) aufweist, die ihrerseits abtriebsseitig jeweils mit einem zugeordneten Verriegelungselement gekoppelt sind und die wie die Verriegelungselemente (13) in der translatorischen Ver- und Entriegelungsbewegung (b) radial und einander gegenläufig hin- und her bewegbar sind, wobei der Getriebemechanismus (G) ein Zahnradelement (26) und abtriebsseitig zwei als Zahnstangenelemente (28) ausgebildete Getriebebauteile (B) aufweist, die in Eingriff mit dem Zahnradelement (26) stehen, wobei das Zahnradelement (26) zur Ver- und Entriegelungsbewegung (b) drehbar gelagert und mittels des Betätigungselementes (7) antreibbar ist und wobei die Zahnstangenelemente (28) bezüglich der Drehachse (d) des Zahnradelementes (26) diametral einander gegenüberliegend angeordnet sind **dadurch gekennzeichnet, dass** das Zahnradelement (26) um eine Drehachse (d) senkrecht zur Deckelachse (a) drehbar gelagert ist.

2. Kochgefäß nach Anspruch 1, **dadurch gekennzeichnet, dass** ein als oberes Zahnstangenelement (28.1) ausgebildetes Zahnstangenelement (28) in Einbaulage an einer zur Innenseite des Deckels (3) zugewandten Seite des Zahnradelementes (26) und ein als unteres Zahnstangenelement (28.1) ausgebildetes Zahnstangenelement (28) in Einbaulage an einer von Innenseite des Deckels (3) abgewandten Seite des Zahnradelementes (26) in das Zahnradelement (26) eingreifen.

3. Kochgefäß nach Anspruch 1 oder 2, **dadurch gekennzeichnet, dass** die Zahnstangenelemente (28) im Wesentlichen U-förmig mit zwei als Zahnstangen (29) ausgebildeten Schenkeln und einem Quersteg (30) ausgebildet ist, wobei die Zahnstangen (29) im Eingriff mit dem Zahnradelement (26) stehen und der Quersteg (30) mit dem Verriegelungselement (13) verbunden ist.

4. Kochgefäß nach einem der Ansprüche 1 bis 3, **dadurch gekennzeichnet, dass** das Betätigungselement (7) als Schwenkhebel (21) ausgebildet ist, dass der Schwenkhebel (21) um eine Schwenkachse (s) senkrecht zur Ver- und Entriegelungsbewegung (b) und zur Deckelachse (a) verschwenkbar an dem Griff (4) gelagert ist und dass der Schwenkhebel (21) kraft- und/oder formschlüssig mit dem Zahnradelement (26) verbunden ist.

5. Kochgefäß nach Anspruch 4, **dadurch gekennzeichnet, dass** die Schwenkachse (s) des Schwenkhebels (21) und die Drehachse (d) des Zahnradelementes (26) zusammenfallen.

6. Kochgefäß nach Anspruch 4 oder 5, **dadurch gekennzeichnet, dass** Schwenkhebel (21) und Zahnradelement (26) in einer Ebene senkrecht zur Drehachse (d) kraft- und/oder formschlüssig aneinander anliegen.

7. Kochgefäß nach Anspruch 5, **dadurch gekennzeichnet, dass** beidseitig des Schwenkhebels (21) jeweils ein Zahnradelement (26) vorgesehen ist und dass die Zahnstangenelemente (28) antriebsseitig jeweils zwei parallel beabstandete Zahnstangen (29) aufweisen, die jeweils in Eingriff mit einem zugeordneten Zahnradelement (26) stehen.

8. Kochgefäß nach Anspruch 4, **dadurch gekennzeichnet, dass** die Schwenkachse (s) des Schwenkhebels (21) und die Drehachse (d) des Zahnradelementes (26) parallel beabstandet zueinander angeordnet sind und der Schwenkhebel (21) an einer bezüglich der Schwenkbewegung umfänglichen Seitenfläche (22) einen Zahnreihenabschnitt (25) aufweist, der im Eingriff mit einem um eine Drehachse (d) parallel zur Schwenkachse (s) drehbar gelagerten Zahnradelement (26) steht.

9. Kochgefäß nach einem der Ansprüche 4 bis 8, **dadurch gekennzeichnet, dass** der Schwenkhebel (21) in der Verriegelungsposition und in der Entriegelungsposition verrastbar ist.

10. Kochgefäß nach einem der Ansprüche 4 bis 9, **dadurch gekennzeichnet, dass** der Schwenkhebel (21) in der Entriegelungsposition über der Außenkontur des Griffes vorsteht und in der Verriegelungsposition in der Außenkontur des Griffes integriert ist.

11. Kochgefäß nach einem der Ansprüche 1 bis 10, **dadurch gekennzeichnet, dass** die Verriegelungsvorrichtung (5) zwei bezüglich des Deckels (3) radial einander gegenüberliegende Verschlusselemente (20) aufweist, von denen mindestens eines radial verschieblich an dem Griff (4) gelagert ist und mittels der Betätigungsvorrichtung (6) bewegbar ist.

12. Kochgefäß nach Anspruch 11, **dadurch gekennzeichnet, dass** die Verschlusselemente (20) als Klemmbacken (19) ausgebildet sind, dass die Klemmbacken (19) in einer Verriegelungsposition einen am Behältnis (2) vorgesehen, nach außen abgewinkelten oder umgebördelten Topfrand (40) zumindest teilumfänglich umgreifen und zumindest teilumfänglich untergreifen sowie dass zumindest eine der Klemmbacken (19) in einer Wirkverbindung mit einem Verriegelungselement (13) steht.

## Claims

1. Cooking vessel, particularly a pressure cooker, comprising a pot-like receptacle (2), a lid (3) provided for closing said receptacle (2) in a pressure-tight manner and having a handle (4) and a locking device (5) for fixing the lid (3) onto the receptacle (2), wherein the locking device (5) for actuation thereof comprises an actuating device (6) including a movable actuating element (7) and a transmission mechanism (G) for transforming the movement of the actuating element (7) into a locking and unlocking movement (b), wherein said locking device (5) comprises two locking elements (13) guided on said lid (3) and/or on said handle (4) for linear displacement, said locking elements (3) being movable to and fro between a locking position and an unlocking position in a translational locking and unlocking movement (b) in the locking and unlocking direction (v, e) radially and oppositely to each other, and wherein the transmission mechanism (G) includes on the output side thereof two transmission components (B) which on their part are each coupled on the output side thereof to an associated locking element and which can be moved to and fro in the same manner as the locking elements (13) in the translational locking and unlocking movement (b) radially and oppositely to each other, wherein the transmission mechanism (G) includes a gear element (26) and on the output side thereof two transmission components (B) configured as tooth rack elements (28) meshing with the gear element (26), wherein the gear element (26) is rotatably supported for the locking and unlocking movement (b) and can be driven by means of the actuating element (7), and wherein the tooth rack elements (28) are diametrically oppositely arranged with respect to the rotation axis (d) of the tooth rack element (28), **characterized in that** the gear element (26) is supported for rotation about a rotation axis (d) perpendicular to the lid axis (a).

2. Cooking vessel according to claim 1, **characterized in that** a tooth rack element (28) constructed as un upper tooth rack element (28.1) in its installed position on a side of the gear element (26) turned towards the inner side of the lid (3), and a tooth rack element (28) constructed as a lower tooth rack element (28.1) in its installed position on a side of the gear element (26) turned away from the inner side of the lid (3) mesh with said gear element (26).

3. Cooking vessel according to claim 1 or 2, **characterized in that** the tooth rack elements (28) are substantially U-shaped and have two legs constructed as tooth racks (29), and a cross web (30), wherein said tooth racks (29) mesh with said gear element (26), and wherein said cross web (30) is connected to the locking element (13).

4. Cooking vessel according to one of the claims 1 to 3, **characterized in that** the actuating element (7) is constructed as a pivoted lever (21), that the pivoted lever (21) is supported for pivoting on the handle (4) about a pivot axis (s) perpendicular to the locking and unlocking movement (b) and to the lid axis (a), and that the pivoted lever (21) is non-positively and/or positively connected to the gear element (26).

5. Cooking vessel according to claim 4, **characterized in that** the pivot axis (s) of the pivoted lever (21) and the rotation axis (d) of the gear element (26) coincide.

6. Cooking vessel according to claim 4 or 5, **characterized in that** the pivoted lever (21) und the gear element (26) contact each other in a plane perpendicular to the rotation axis (d) in a non-positive and/or positive manner.

7. Cooking vessel according to claim 5, **characterized in that** on both sides of the pivoted lever (21) a respective gear element (26) is arranged and that the tooth rack elements (28) on the driven side thereof each include two parallel-spaced tooth racks (29) respectively meshing with an associated gear element (26).

8. Cooking vessel according to claim 4, **characterized in that** the pivot axis (s) of the pivoted lever (21) and the rotation axis (d) of the gear element (26) are arranged so as to be spaced parallel to each other, and the pivoted lever (21) includes a section of a tooth row (25) on a circumferential side face with respect to the pivoting movement, said section of a tooth row (25) meshing with a gear element (26) supported for rotation about a rotation axis (d) parallel to the pivot axis (s).

9. Cooking vessel according to one of the claims 4 to 8, **characterized in that** the pivoted lever (21) can be locked in the locking position and in the unlocking position.

10. Cooking vessel according to one of the claims 4 to 9, **characterized in that** the pivoted lever (21) protrudes over the outer contour of the handle in the unlocked position and is integrated in the outer contour of the handle in the locked position.

11. Cooking vessel according to one of the claims 1 to 10, **characterized in that** the locking device (5) includes two closure elements (20) disposed radially oppositely to each other with respect to the lid (3), at least one thereof being supported for radial displacement on the lid (4) and being movable by means of the actuating device (6).

12. Cooking vessel according to claim 11, **characterized in that** the closure elements (20) are constructed as jaws (19), that said jaws (19) in a locking position grip around and under a rim (40) that is provided on the receptacle (2) and that is angled or beaded outwards, at least over a part of its circumference, and that at least one of said jaws (19) is operatively connected to the locking element (13).

## Revendications

1. Récipient de cuisson, notamment autocuiseur, comprenant un récipient en forme de pot (2), un couvercle (3) prévu pour fermer ledit récipient (2) de manière étanche à la pression et comportant une poignée (4) et un dispositif de verrouillage (5) pour la fixation du couvercle (3) sur le récipient (2), le dispositif de verrouillage (5) comportant pour sa manoeuvre un dispositif de manoeuvre (6) avec un élément de manoeuvre mobile (7) et avec un mécanisme d'engrenage (G) pour la transformation du mouvement de l'élément de manoeuvre (7) en un mouvement de verrouillage et déverrouillage (b), le dispositif de verrouillage (5) comportant deux éléments de verrouillage (13) guidés sur le couvercle (3) et/ou sur la poignée (4) d'une manière déplaçable linéairement, les éléments de verrouillage pouvant réciproquer entre une position de verrouillage et une position de déverrouillage radialement et en directions opposées par un mouvement translationnel de verrouillage et déverrouillage (b) en la direction de verrouillage et déverrouillage (v, e), et le mécanisme d'engrenage (G) comportant sur la côté du sortie de l'engrenage deux éléments d'engrenage (B) dont la côté du sortie de l'engrenage est respectivement couplée à un élément de verrouillage associé et qui peuvent être réciproqués, comme les éléments de verrouillage (13), radialement et opposés l'un à l'autre dans le mouvement translationnel de verrouillage et déverrouillage (b), le mécanisme d'engrenage (G) comprenant un élément de roue dentée (26) et sur la côté du sortie de l'engrenage deux éléments d'engrenage (B) en forme des éléments de crémaillère (28) étant engrenés avec l'élément de roue dentée (26), l'élément de roue dentée étant supporté d'une manière rotative pour le mouvement de verrouillage et déverrouillage (b) et pouvant être commandé par l'élément de manoeuvre (7), et les éléments de crémaillère (28) étant diamétralement opposés l'un à l'autre par rapport à l'axe de rotation (d) de l'élément de roue dentée (26), **caractérisé en ce que** l'élément de roue dentée (26) est supporté pour rotation autour d'un axe de rotation (d) perpendiculairement à l'axe de couvercle (a).

2. Récipient de cuisson selon la revendication 1, **caractérisé en ce qu'**un élément de crémaillère (28) agencé comme d'élément de crémaillère supérieur (28.1), dans la position de montage sur une côté de l'élément de roue dentée (26) tournée vers la face intérieure du couvercle (1), et un élément de crémaillère (28) agencé comme d'élément de crémaillère inférieur (28.1), dans la position de montage sur une côté de l'élément de roue dentée (26) détournée de la face intérieure du couvercle (1), sont engrenés avec l'élément de roue dentée (26).

3. Récipient de cuisson selon l'une des revendications 1 ou 2, **caractérisé en ce que** les éléments de crémaillère (28) sont agencés essentiellement en forme d'U avec deux branches en forme de crémaillères (29) et avec une traverse (30), les crémaillères (29) étant engrenées avec l'élément de roue dentée, et la traverse (30) étant reliée à l'élément de verrouillage (13).

4. Récipient de cuisson selon l'une des revendications 1 à 3, **caractérisé en ce que** l'élément de manoeuvre (7) est agencé en forme de levier pivotant (21), que le levier pivotant (21) est supporté sur la poignée (4) pour pivotement autour d'un axe de pivotement (s) verticalement par rapport au mouvement de verrouillage et déverrouillage (b) et par rapport à l'axe de couvercle (a), et **en ce que** le levier pivotant (21) est connecté à l'élément de roue dentée (26) de manière non-positive ou positive.

5. Récipient de cuisson selon la revendication 4, **caractérisé en ce que** l'axe de pivotement (s) du levier pivotant (21) coïncide avec l'axe de rotation (d) de l'élément de roue dentée (26).

6. Récipient de cuisson selon l'une des revendications 4 ou 5, **caractérisé en ce que** le levier pivotant (21) et l'élément de roue dentée (26) sont voisins l'un à l'autre de manière non-positive ou positive dans un plan perpendiculaire à l'axe de rotation (d).

7. Récipient de cuisson selon la revendication 5, **caractérisé en ce qu'**aux deux côtés du levier pivotant (21) est prévu un élément de roue dentée respectif (26) et que les éléments de crémaillère (28) chacun comporte sur ses côtés d'entraînement deux crémaillères (29) écartées, chacune étant engrené avec l'élément de roue dentée (26) associé.

8. Récipient de cuisson selon la revendication 5, **caractérisé en ce que** l'axe de pivotement (s) du levier pivotant (21) et l'axe de rotation (d) de l'élément de roue dentée (26) sont écartés l'un de l'autre de manière parallèle et **en ce que** le levier pivotant (21) comporte sur une face latérale circonférentielle (22) par rapport au mouvement pivotant une partie d'une ligne de dents (25) qui est engrenée avec un élément de roue dentée supporté de manière rotative autour d'un axe de rotation (d) et parallèle à l'axe de pivotement (s).

9. Récipient de cuisson selon l'une des revendications 4 à 8, **caractérisé en ce que** le levier pivotant (21) peut être verrouillé dans la position de verrouillage et dans la position de déverrouillage.

10. Récipient de cuisson selon l'une des revendications 4 à 9, **caractérisé en ce que** le levier pivotant (21), dans la position de déverrouillage, fait saillie au-delà du contour extérieur de la poignée et, dans la position de verrouillage, est intégré dans le contour extérieur de la poignée.

11. Récipient de cuisson selon l'une des revendications 1 à 10, **caractérisé en ce que** le dispositif de verrouillage (5) comporte deux éléments de fermeture (20), l'un arrangé radialement vis à vis l'autre par rapport au couvercle (3), l'un au moins desdits éléments de fermeture étant supporté sur la poignée (4) d'une manière radialement déplaçable et pouvant être mû par le biais du dispositif de manoeuvre (6).

12. Récipient de cuisson selon la revendication 11, **caractérisé en ce que** les éléments de fermeture (20) sont agencés comme des mâchoires de serrage (19), que les mâchoires de serrage (19), dans une position de verrouillage, grippent autour ou sous le bord du pot (40) plié ou serti vers l'extérieur, au moins en partie de sa circonférence, et **en ce que** l'une au moins des mâchoires de serrage (19) est connectée de façon opératoire à un élément de verrouillage (13).
